# EUROPÄISCHE PATENTANMELDUNG

(11) **EP 1 538 398 A2**
(43) Veröffentlichungstag der Anmeldung: **08.06.2005**
(21) Anmeldenummer: 04027727.9
(22) Anmeldetag: 23.11.2004
(51) Int. Cl.: F24F 5/00, F28D 5/00

(54) **Kontaktkörper, insbesondere für einen Verdunstungsbefeuchter, und Verfahren zur Herstellung eines Kontaktkörpers**

(30) Priorität: 05.12.2003 DE 10357307
(71) Anmelder: 2H KUNSTSTOFF GmbH, D-48493 Wettringen (DE)
(72) Erfinder: Kalter, Stefan, 48432 Rheine-Elte (DE); Wolbeck, Ralf, 48607 Ochtrup (DE)
(74) Vertreter: Linnemann, Winfried

(57) **Zusammenfassung**

**2.1.** Bei bekannten Kontaktkörpern bestehen die Lagen aus imprägniertem Glasfibermaterial, das haltbar, jedoch teuer ist, oder aus imprägniertem Papiermaterial, das preiswert, jedoch wenig haltbar und nicht reinigungsfähig ist. Der neue Kontaktkörper soll haltbar und reinigungsfähig sowie in einem kostengünstigen Verfahren herstellbar sein.
**2.2.** In dem neuen Kontaktkörper (100) sind zwei Arten von Lagen (1, 2) vorgesehen sind, wobei eine erste Art von Lagen (1) aus einem selbsttragenden Material und eine zweite Art von Lagen (2) aus einem saugfähigen, nichttragenden Material besteht, die miteinander verbunden werden.
**2.3.** Das eine Material sorgt für die nötige Tragfähigkeit und das andere Material für die nötige Wasseraufnahmefähigkeit des Kontaktkörpers (100), wobei jedes Material für sich seinem Zweck entsprechend optimal ausgewählt werden kann.

## Beschreibung

Die vorliegende Erfindung betrifft einen Kontaktkörper, insbesondere für einen Verdunstungsbefeuchter, wobei der Kontaktkörper selbsttragend ist und aus mehreren Lagen, die zumindest zum Teil räumlich strukturiert sind und die miteinander verbunden sind, gebildet ist, wobei benachbarte Lagen zwischen sich luftdurchlässige Strömungswege ausbilden und wobei der Kontaktkörper einerseits mit zu verdunstendem Wasser beschickbar und andererseits von einem Luftstrom unter Befeuchtung und Kühlung der Luft durchströmbar ist. Weiter betrifft die Erfindung einen Kontaktkörper gemäß dem Oberbegriff des Patentanspruchs 10 und ein Verfahren zur Herstellung eines Kontaktkörpers.

Kontaktkörper der genannten Art sind aus der praktischen Anwendung in zwei unterschiedlichen Ausführungen bekannt. Gemeinsam ist den bekannten Kontaktkörpern, daß sie jeweils aus Lagen aus einem einheitlichen Material bestehen.

Das erste bekannte Material ist ein imprägniertes Glasfibermaterial, das anorganisch, korrosionsbeständig, hygroskopisch und unbrennbar ist. Außerdem ist dieses Material so stabil, daß die einzelnen Lagen bzw. der daraus gebildete Kontaktkörper selbsttragend sind/ist.

Das zweite bekannte Material für die Lagen des Kontaktkörpers ist ein imprägniertes Papiermaterial, das einerseits benetzbar ist und andererseits so steif ist, daß die einzelnen Lagen bzw. der daraus gebildete Kontaktkörper aus diesem Material auch in nassem Zustand noch ausreichend selbsttragend ist.

Als nachteilig wird bei den bekannten Kontaktkörpern angesehen, daß sie nicht oder nur sehr beschränkt gereinigt werden können, weil ihnen die mechanische Robustheit, z.B. für den Einsatz eines unter Druck stehenden Strahls einer Reinigungsflüssigkeit, fehlt. Außerdem ist insbesondere bei den Kontaktkörpern mit Lagen aus dem imprägnierten Papiermaterial die Lebensdauer begrenzt, nach praktischen Erfahrungen auf wenige Jahre. Ein spezifischer Nachteil des imprägnierten Glasfibermaterials ist noch dessen relativ hoher Preis, der zu entsprechend hohen Kosten für die Kontaktkörper führt.

Für die vorliegende Erfindung stellt sich deshalb die Aufgabe, einen Kontaktkörper der eingangs genannten Art zu schaffen, der die angegebenen Nachteile vermeidet und der insbesondere eine längere Lebensdauer erreicht, der bessere Reinigungsmöglichkeiten bietet, der eine mit den bekannten Kontaktkörpern vergleichbare Befeuchtungs- und Kühlleistung hat und der ein gutes Preis-/Leistungs-Verhältnis aufweist. Außerdem soll ein Verfahren zur Herstellung eines Kontaktkörpers angegeben werden.

Eine erste, den Kontaktkörper betreffende Lösung der gestellten Aufgabe gelingt erfindungsgemäß mit einem Kontaktkörper der eingangs genannten Art, der dadurch gekennzeichnet ist, daß im Kontaktkörper zwei Arten von Lagen vorgesehen sind, wobei eine erste Art von Lagen aus einem selbsttragenden Material und eine zweite Art von Lagen aus einem saugfähigen, nicht tragenden Material bestehen.

Bei diesem ersten erfindungsgemäßen Kontaktkörper werden vorteilhaft die Aufgaben, die der Kontaktkörper erfüllen soll, auf zwei unterschiedliche und deshalb für ihren jeweiligen Zweck optimal auswählbare Materialien aufgeteilt. Dabei ist das eine Material ein selbsttragendes Material, das innerhalb der ersten Art von Lagen des Kontaktkörpers dafür sorgt, daß der Kontaktkörper, wie gewünscht, selbsttragend wird. Das zweite Material ist ein saugfähiges Material, das speziell für eine hohe Wasseraufnahmefähigkeit und für eine gute Verdunstung und damit eine intensive Befeuchtung und Kühlung des durch den Kontaktkörper hindurchströmenden Luftstroms ausgelegt werden kann. Tragende Eigenschaften muß das zweite Material nicht aufweisen, so daß hier die Auswahl des Materials unabhängig von Anforderungen hinsichtlich der Tragfähigkeit erfolgen kann. Auf diese Weise wird ein Kontaktkörper geschaffen, der auf der einen Seite leicht und stabil ist und der auf der anderen Seite eine hohe Wasseraufnahmefähigkeit und eine große Verdunstungsfläche für die Befeuchtung und Kühlung des durch den Kontaktkörper strömenden Luftstroms aufweist. Damit ist der Kontaktkörper besonders stabil und lange haltbar und aufgrund seiner hohen Stabilität kann er auch schadlos gereinigt und dann erneut eingesetzt werden.

In weiterer Ausgestaltung ist vorgesehen, daß die erste Art von Lagen die räumlich strukturierten Lagen bildet und daß jeweils eine Lage der zweiten Art unstrukturiert oder schwächer als die erste Art von Lagen strukturiert zwischen je zwei Lagen der ersten Art angeordnet ist. Die Lagen der ersten Art sorgen für die gewünschte räumliche Struktur mit den durch diese verlaufenden Strömungswegen für die zu befeuchtende und zu kühlende Luft. Dabei erhält durch die Verwendung eines tragfähigen Materials für die erste Art von Lagen die räumliche Struktur eine ausreichende Stabilität. Die zweite Art von Lagen ist zwischen den tragenden Lagen der ersten Art angeordnet und wird von diesen gehalten und getragen. Dadurch ist in jedem für die Luft zur Verfügung gestellten Strömungsweg eine intensive Berührung zwischen der Luft und der Oberfläche der Lagen der zweiten Art gewährleistet. Es wird eine große Verdunstungsoberfläche entlang der Luftströmungswege geboten, was für eine wirksame Befeuchtung und Kühlung der den Kontaktkörper durchströmenden Luft sorgt. Gleichzeitig sorgen die tragenden Lagen der ersten Art dafür, daß die Lagen der zweiten Art, die für die Aufnahme des zu verdunstenden Wassers zuständig sind, sicher gehalten werden. Unerwünschte Bewegungen oder Verschiebungen der nicht tragenden Lagen der zweiten Art werden so ausgeschlossen.

Eine alternative Weiterbildung des Kontaktkörpers sieht vor, daß die erste Art von Lagen die räumlich strukturierten Lagen bildet und daß jeweils eine Lage der zweiten Art auf eine Seite oder auf beide Seiten jeweils einer Lage der ersten Art mit gleicher Strukturierung aufgebracht ist. In dieser Ausführung des Kontaktkörpers liegen die unterschiedlichen Lagen unmittelbar aneinander an und weisen die gleiche Struktur auf. Auch in dieser Ausführung wird eine große Verdunstungsoberfläche bei einer hohen Stabilität des Kontaktkörpers geboten.

Bevorzugt besteht die erste Art von Lagen aus einem thermoplastischen oder duroplastischen Kunststoff. Diese Materialien sind leicht, korrosionsbeständig und ausreichend stabil sowie mit geringem Aufwand verarbeitbar.

Weiter schlägt die Erfindung bevorzugt vor, daß die erste Art von Lagen aus gewellten, vollflächigen oder durchbrochenen Folien oder aus gewellten Gittern besteht. Diese Ausgestaltung der Lagen der ersten Art sorgt einerseits für eine günstige räumliche Strukturierung und andererseits für eine hohe Tragfähigkeit der Kontaktkörper. Zur Bildung des Kontaktkörpers werden die gewellten Lagen zweckmäßig mit einander überkreuzenden Wellungen miteinander verbunden, wodurch sich günstige Verläufe der Luftströmungswege innerhalb des Kontaktkörpers ergeben. Außerdem wird so bei geringem Gewicht und bei sparsamem Materialeinsatz ein belastbarer Kontaktkörper geschaffen.

Um die Wasseraufnahmefähigkeit und damit die Verdunstungsleistung des Kontaktkörpers insgesamt zu erhöhen, besteht die Möglichkeit, daß das die erste Art von Lagen bildende selbsttragende Material ein poröses, saugfähiges Material ist. Auf diese Weise werden beide Arten von Lagen innerhalb des Kontaktkörpers zur Aufnahme und Verdunstung von Wasser herangezogen. Die Porosität des die erste Art von Lagen bildenden Materials muß dabei selbstverständlich so ausgestaltet werden, daß die selbsttragenden Eigenschaften dieses Materials nicht oder wenigstens nicht zu weitgehend beeinträchtigt werden.

Weiterhin ist bevorzugt vorgesehen, daß das die erste Art von Lagen bildende Material Polypropylen (PP) ist. Dieses Material ist einerseits kostengünstig und leicht verarbeitbar und andererseits für den Verwendungszweck ausreichend stabil und dauerhaft haltbar. Außerdem ist das Material bei geringem Gewicht mechanisch hoch belastbar.

Für das die zweite Art von Lagen bildende Material ist erfindungsgemäß bevorzugt vorgesehen, daß dieses ein Geotextil oder ein Vlies ist. Beide Materialien sind gängige und am Markt kostengünstig verfügbare Stoffe, die zudem die gewünschte Saugfähigkeit und damit eine gute Verdunstung von Wasser bieten. Außerdem sind die genannten Materialien mechanisch robust und alterungsbeständig, so daß sie eine lange Lebensdauer des Kontaktkörpers erwarten lassen. Außerdem sind diese Materialien mechanisch unempfindlicher als Glasfibermaterialien und insbesondere als Papiermaterialien. Deshalb ist vorteilhaft eine Reinigung des Kontaktkörpers nach einer gewissen Einsatzzeit möglich, wonach dann derselbe Kontaktkörper erneut eingesetzt werden kann.

Eine weitere Ausgestaltung des erfindungsgemäßen Kontaktkörpers sieht vor, daß das die zweite Art von Lagen bildende Material einseitig oder beidseitig auf jeweils eine Lage der ersten Art aufkaschiert ist. In dieser Ausgestaltung weist der Kontaktkörper also Lagenpakete auf, die jeweils entweder aus einer tragenden und einer saugfähigen Lage oder aus einer tragenden und zwei saugfähigen Lagen bestehen. Insbesondere in der zweiten Ausgestaltung mit zwei saugfähigen Lagen pro tragende Lage werden ein sehr großes Wasseraufnahmevolumen und eine sehr große Verdunstungsoberfläche geschaffen.

Eine zweite, alternative Lösung der eingangs gestellten Aufgabe gelingt erfindungsgemäß mit einem Kontaktkörper gemäß dem Oberbegriff des Patentanspruchs 10, der dadurch gekennzeichnet ist, daß das die Lagen bildende Material ein geformtes Geotextil oder ein geformtes Vlies oder ein geformter poröser Kunststoff ist.

Bei dieser alternativen Lösung wird innerhalb des Kontaktkörpers auf separate tragende Lagen verzichtet und die Funktion des Tragens wird in das genannte, spezielle Material integriert, das für die Aufnahme und Verdunstung des Wassers zuständig ist. Damit wird ein einfacher und kostengünstiger Kontaktkörper geschaffen, der zwar mechanisch geringer belastbar ist, was aber insbesondere bei kleineren Kontaktkörpern nicht zu Problemen führt. Durch die Verwendung der speziellen Materialien, nämlich Geotextil oder Vlies oder poröser Kunststoff, kann auch dieser Kontaktkörper nach einer gewissen Einsatzzeit gereinigt werden, wonach dann ein weiterer Einsatz des Kontaktkörpers möglich ist. Auch sorgen die genannten Materialien für eine lange Lebensdauer des Kontaktkörpers, da sich diese unter dem Einfluß von Luft und Wasser nicht zersetzen.

In weiterer Ausgestaltung des zuvor beschriebenen alternativen Kontaktkörpers ist vorgesehen, daß in das Geotextil oder Vlies ein mechanisch und/oder thermisch formbares oder zunächst flüssiges und in einer formgebenden Form aushärtbares, tragendes Zusatzmaterial eingemischt oder eingelegt ist. In dieser Weiterbildung des zuvor beschriebenen alternativen Kontaktkörpers sind die saugfähigen Materialien hinsichtlich ihrer Tragfähigkeit durch die zusätzliche Maßnahme des Zusatzmaterials verbessert. Dadurch wird eine höhere mechanische Belastbarkeit erreicht, ohne daß gleichzeitig das Wasseraufnahmevermögen und die Verdunstungsfähigkeit des Materials nennenswert beeinträchtigt werden.

Um dem zuvor erwähnten Kunststoff die für die Aufnahme und für die Verdunstung von Wasser erforderliche Porosität zu verleihen, ist bevorzugt vorgesehen, daß der Kunststoff ein durch vorherige Zugabe eines Schäumadditivs bei seiner Formgebung thermisch aufschäumbarer, offene Poren ausbildender Kunststoff ist.

Wie an sich bekannt, besteht auch der erfindungsgemäße Kontaktkörper in seinen verschiedenen Ausführungen jeweils aus einer Anzahl von miteinander verbundenen Lagen oder Lagenpaketen. Für deren Verbindung miteinander ist bevorzugt vorgesehen, daß die einzelnen Lagen oder vorab gebildete Lagenpakete des Kontaktkörpers miteinander verklebt oder verschweißt oder mechanisch, z.B. durch miteinander rastend oder klemmend in Eingriff tretende Konturen, verbunden sind. Mit diesen Verbindungstechniken lassen sich die Lagen oder Lagenpakete schnell und einfach und ausreichend sicher und dauerhaft miteinander zu dem Kontaktkörper verbinden.

Um zu vermeiden, daß sich im Kontaktkörper Mikroorganismen, z.B. Bakterien, ansiedeln, schlägt die Erfindung vor, daß das die Lagen bildende Material/die die Lagen bildenden Materialien mit einem antibakteriell wirkenden Additiv ausgerüstet ist/sind. Dieses antibakteriell wirkende Additiv vermindert die Gefahr einer Ansiedlung von Mikroorganismen im Kontaktkörper. Hierdurch wird die Gefahr, daß von dem Kontaktkörper Gesundheitsgefahren ausgehen, zumindest deutlich verringert.

Eine weitere Ausgestaltung schlägt dazu vor, daß das antibakteriell wirkende Additiv in das Material/die Materialien der Lagen eingebettet und/oder auf dieses/diese aufgetragen ist.

Die Lösung des Teils der Aufgabe, der ein Verfahren zur Herstellung eines Kontaktkörpers betrifft, gelingt erfindungsgemäß mit einem Verfahren gemäß dem Oberbegriff des Patentanspruchs 16, das dadurch gekennzeichnet ist, daß eine Schmelzebahn oder eine erwärmte Folien- oder Gitterbahn eines thermoplastischen Kunststoffs und parallel dazu einseitig oder beidseitig von der Schmelze- oder Folienbahn (je) eine Bahn aus einem saugfähigen Material einem formgebenden Werkzeug zugeführt werden, daß in dem Werkzeug die Schmelze- oder Folienbahn geformt und gleichzeitig mit der Bahn/den Bahnen aus dem saugfähigen Material unter deren gleicher Formung zu einem Lagenpaket verbunden wird und daß nach einem die Formung fixierenden Abkühlen jeweils mehrere Lagenpakete zu einem Kontaktkörperblock miteinander verbunden werden.

Mit dem erfindungsgemäßen Verfahren wird ohne jeden zusätzlichen Verbindungsaufwand eine Lage aus einem tragenden Material mit einer oder mit zwei Lagen aus saugfähigem Material versehen. Mit dem Verfahren läßt sich also auf besonders rationelle und kostengünstige Weise der erfindungsgemäße Kontaktkörper fertigen.

Besonders rationell wird das Verfahren in einer weiteren Ausgestaltung, die vorsieht, daß das Formen und Verbinden in einem stetig im Durchlauf arbeitenden Werkzeug erfolgt und daß das aus dem Werkzeug austretende Lagenpaket in Abschnitte vorgebbarer Länge geteilt wird.

Schließlich schlägt die Erfindung zur weiteren Verbesserung der Wirtschaftlichkeit des Herstellungsverfahrens noch vor, daß Kontaktkörperblöcke mit einer Größe hergestellt werden, die größer ist als die Größe der Kontaktkörper und daß aus dem Kontaktkörperblock anschließend Kontaktkörper gewünschter Abmessungen ausgeschnitten werden. Die Kontaktkörperblöcke können damit mit einheitlichen Maßen auf Vorrat produziert werden. Hieraus lassen sich dann, entsprechend dem Bedarf der Kunden, für den Einzelfall genau passende Kontaktkörper nach Maß ausschneiden.

Im folgenden werden mehrere Ausführungsbeispiele der Erfindung anhand einer Zeichnung erläutert. Die Figuren der Zeichnung zeigen:
- Figur 1: einen Ausschnitt aus einem Kontaktkörper in einem Teil-Vertikalschnitt,
- Figur 2: einen Ausschnitt aus einem einen Teil eines Kontaktkörpers bildenden Lagenpaket, ebenfalls im Teil-Vertikalschnitt,
- Figur 3: in gleicher Darstellungsweise wie die Figur 2 eine geänderte Ausführung eines Lagenpakets und
- Figur 4: einen Ausschnitt aus einer einzelnen, einen Teil des Kontaktkörpers bildenden Lage, auch hier im Teil-Vertikalschnitt.

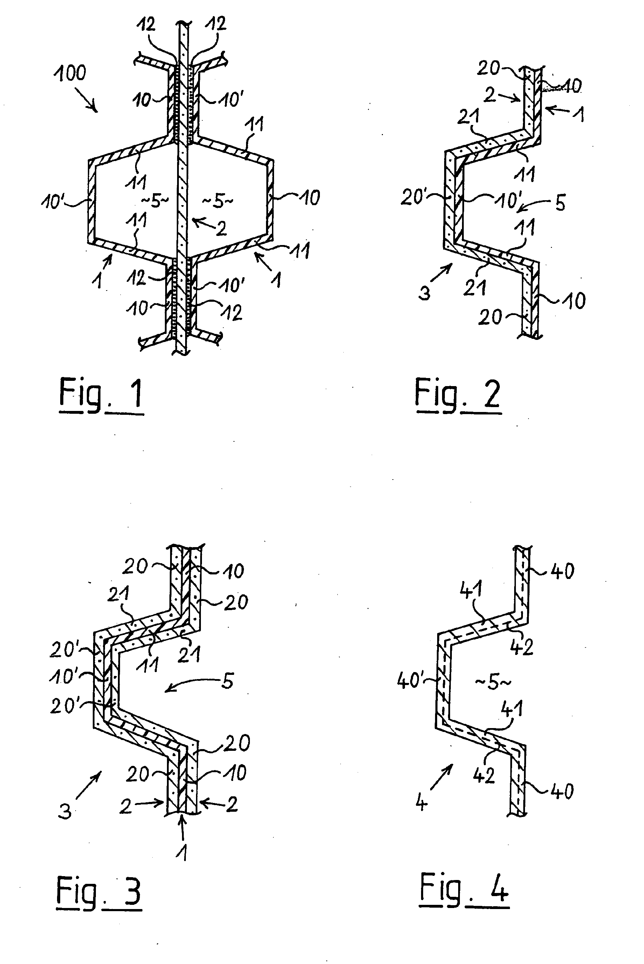

Figur 1 zeigt innerhalb des Ausschnitts aus einem Kontaktkörper 100 links und rechts jeweils im Schnitt einen Abschnitt einer Lage 1 einer ersten Art und zwischen diesen verlaufend einen Abschnitt einer Lage 2 einer zweiten Art.

Die Lagen 1 der ersten Art bestehen hier aus einem selbsttragenden Material, nämlich aus Kunststoff, z.B. Polypropylen (PP). Diese Lagen 1 sind aus einer Folie oder einem Schmelzeband hergestellt und mit einer Wellung mit Wellentälern 10, Wellenbergen 10' sowie schräg zwischen diesen verlaufenden Flanken 11 ausgebildet. Von der Seite, d.h. in Figur 1 von links oder von rechts betrachtet, haben die Lagen 1 eine rechteckige oder quadratische Umrißform, wobei die Wellungen mit den Wellentälern 10 und Wellenbergen 10' jeweils parallel zueinander, aber schräg zu den Kanten der Lagen 1 verlaufen.

Zwischen je zwei benachbarten Lagen 1 der ersten Art ist je eine Lage 2 der zweiten Art als hier flach und eben ausgebildete Lage angeordnet. Diese Lage 2 der zweiten Art besteht aus einem saugfähigen, wasseraufnehmenden und wasserverdunstenden Material, wie Geotextil oder Vlies, das nicht tragend ist. In Verbindungsbereichen 12 sind die Lagen 1 und 2 miteinander verbunden, vorzugsweise verklebt oder verschweißt. So werden die Lagen 2 der zweiten Art von den tragenden Lagen 1 gehalten.

Wie vorstehend erwähnt, zeigt die Figur 1 nur einen kleinen Ausschnitt aus einem Kontaktkörper 100. Innerhalb des Kontaktkörpers 100 wiederholt sich die Anordnung von Lagen 1 und Lagen 2 mehrfach, bis ein Kontaktkörper 100 mit den gewünschten Abmessungen erreicht ist. Dabei verlaufen jeweils die Wellungen aus den Wellentälern 10 und Wellenbergen 10' von benachbarten Lagen 1 mit unterschiedlicher Richtung. Diese unterschiedliche Ausrichtung kann einfach dadurch erreicht werden, daß jede zweite Lage 1 oder jedes zweite Paket aus jeweils zwei Lagen 1 gewendet und dann mit den anderen Lagen verbunden wird. Auf diese Weise werden innerhalb des Kontaktkörpers 100 viele unter zwei einander kreuzenden Richtungen durch den Kontaktkörper 100 verlaufende Luftströmungswege 5 ausgebildet.

In seinem Einsatz, z.B. in einem Verdunstungsbefeuchter, wird der Kontaktkörper 100 einerseits mit Wasser beschickt, vorzugsweise durch Berieselung von oben, und andererseits von einem Luftstrom, vorzugsweise etwa horizontal, durchströmt, der beispielsweise mittels eines Ventilators erzeugt wird. Bei der Durchströmung des Kontaktkörpers 100 nimmt die Luft Feuchtigkeit aus dem Kontaktkörper 100, insbesondere aus den Lagen 2 aus saugfähigem Material, auf, wodurch die Luft befeuchtet und gleichzeitig infolge der zwangsläufig auftretenden Verdunstungskälte gekühlt wird.

Innerhalb des Kontaktkörpers 100 sorgen dabei die Lagen 1 dafür, daß der Kontaktkörper 100 ausreichend selbsttragend und formbeständig ist, während die Lagen 2 der zweiten Art für die Aufnahme, Verteilung und Verdunstung des Wassers sorgen. Damit können die beiden Materialien für die Lagen 1 und 2 jeweils ihrem Verwendungszweck entsprechend optimiert ausgewählt werden.

Figur 2 zeigt ein zweites Ausführungsbeispiel, für das charakteristisch ist, daß die Lage 1 der ersten Art einseitig mit einer deckungsgleich geformten Lage 2 der zweiten Art belegt ist. Die Lage 2 der zweiten Art, die aus dem saugfähigen Material besteht, ist hier auf die eine Seite der Lage 1, die aus dem tragenden Material besteht, aufgebracht, beispielsweise aufkaschiert. Hierdurch erhält die Lage 2 der zweiten Art eine Oberfläche, die genauso groß ist wie die Oberfläche der Lage 1 der ersten Art.

Auch hier wird jeweils aus mehreren Lagenpaaren aus Lagen 1 und 2, die zusammen jeweils ein Lagenpaket 3 bilden, ein Kontaktkörper gebildet. Innerhalb dieses Kontaktkörpers sorgen die Lagen 1 für eine ausreichende Stabilität, während die Lagen 2 für die Wasserverteilung und -verdunstung sorgen. Die räumliche Strukturierung der Lagen 1 und 2 bzw. des daraus gebildeten Lagenpakets 3 entspricht dem zuvor beschriebenen Ausführungsbeispiel. Auch in Figur 2 sind innerhalb des Lagenpakets Wellungen mit Wellentälern 11, 21, Wellenbergen 10', 20' und diese jeweils verbindenden schrägen Flanken 11, 21 vorgesehen. Das Zusammenfügen der Lagenpakete 3 zu dem Kontaktkörper erfolgt auch hier zweckmäßig mit einander kreuzenden Richtungen der Wellungen und der Luftströmungswege 5, um einen stabilen Kontaktkörper und eine intensive Verdunstung zu erzielen.

Figur 3 zeigt eine Ausführung eines Lagenpakets 3, das sich von dem Beispiel gemäß Figur 2 dadurch unterscheidet, daß nun beide Seiten der Lage 1 der ersten Art mit je einer Lage 2 der zweiten Art, also einer saugfähigen Lage, belegt sind. Auf diese Weise wird eine Verdopplung der Größe der Oberfläche des Materials, das die Lagen 2 der zweiten Art bildet, erreicht. Dadurch wird auch eine etwa verdoppelte Verdunstungsleistung des daraus gebildeten Kontaktkörpers erreicht. Im übrigen entspricht die Formgebung des Lagenpakets 3 der schon anhand von Figur 2 und Figur 1 erläuterten Formgebung.

Figur 4 schließlich zeigt ein Beispiel einer Lage 4, die zwei Eigenschaften in sich vereint, nämlich selbsttragend und saugfähig zugleich zu sein. Diese Lage 4 besteht aus einem beide Eigenschaften aufweisenden Material, nämlich aus einem Geotextil oder Vlies oder einem porösen, offene Poren aufweisenden Kunststoff. Um auch bei einem an sich weniger tragfähigen Geotextil oder Vlies die nötige Tragfähigkeit zu erreichen, kann in das Material, das die Lage 4 bildet, ein Zusatzmaterial 42 eingebracht sein, das dafür sorgt, daß eine Formung der Lage 4 mit ausreichender Dauerhaftigkeit und Stabilität erhalten bleibt. Bei diesem Zusatzmaterial 42 kann es sich beispielsweise um eine formbare, in das Material der Lage 4 eingelegte Lage handeln, die wenig Volumen beansprucht und die die Saugfähigkeit und Verdunstungsfähigkeit der Lage 4 praktisch nicht beeinträchtigt. Auch kann das Zusatzmaterial 42 ein Material sein, daß zunächst flüssig in das die Lage 4 bildende Material eingebracht ist und das dann in einem formgebenden Formwerkzeug aushärtet, wonach dann die Form der Lage 4 fixiert ist.

Auch aus den Lagen 4 läßt sich dann in gleicher, an sich bekannter Art und Weise ein Kontaktkörper erstellen, indem eine Anzahl von Lagen 4 mit einander kreuzenden Wellungen aus Wellentälern 40, Wellenbergen 40'und schrägen Flanken 41 an den Berührungspunkten miteinander verbunden wird, beispielsweise verklebt oder verschweißt wird.

Allen beschriebenen Ausführungsbeispielen des Kontaktkörpers 100 bzw. der Lagenpakete 3 oder der Lage 4 ist gemeinsam, daß sie so stabil und widerstandsfähig sind, daß nach einer im Betrieb zwangsläufig auftretenden Verschmutzung eine Reinigung möglich ist, beispielsweise mittels eines unter Druck stehenden Strahls einer Reinigungsflüssigkeit. Damit wird neben einer langen Einsatzdauer auch eine mehrfache Verwendung der Kontaktkörper ermöglicht. Diese vorteilhaften Eigenschaften erhöhen insbesondere die Wirtschaftlichkeit der Kontaktkörper bei ihrem Einsatz in zugehörigen Anlagen, beispielsweise für eine Luftkühlung, Luftbefeuchtung und/oder für einen Stoffaustausch. Anwendbar sind die Kontaktkörper gemäß Erfindung beispielsweise in Klimaanlagen, in Stallkühleinrichtungen, für die Gewächshauskühlung, für die Industriekühlung, für das Befeuchten von Lagerhallen für Lebensmittel, für die Reduktion von Staub aus einem Luftstrom oder für das Auswaschen von Ammoniak oder Schwefelverbindungen aus der durch den Kontaktkörper geführten Luft.

## Patentansprüche

1. Kontaktkörper (100), insbesondere für einen Verdunstungsbefeuchter, wobei der Kontaktkörper (100) selbsttragend ist und aus mehreren Lagen (1, 2, 4), die zumindest zum Teil räumlich strukturiert sind und die miteinander verbunden sind, gebildet ist, wobei benachbarte Lagen (1; 2; 4) zwischen sich luftdurchlässige Strömungswege (5) ausbilden und wobei der Kontaktkörper (100) einerseits mit zu verdunstendem Wasser beschickbar und andererseits von einem Luftstrom unter Befeuchtung und Kühlung der Luft durchströmbar ist,
**dadurch gekennzeichnet,**
**daß** im Kontaktkörper (100) zwei Arten von Lagen (1, 2) vorgesehen sind, wobei eine erste Art von Lagen (1) aus einem selbsttragenden Material und eine zweite Art von Lagen (2) aus einem saugfähigen, nichttragenden Material besteht.

2. Kontaktkörper nach Anspruch 1, **dadurch gekennzeichnet, daß** die erste Art von Lagen (1) die räumlich strukturierten Lagen bildet und daß jeweils eine Lage (2) der zweiten Art unstrukturiert oder schwächer als die erste Art von Lagen (1) strukturiert zwischen je zwei Lagen (1) der ersten Art angeordnet ist.

3. Kontaktkörper nach Anspruch 1, **dadurch gekennzeichnet, daß** die erste Art von Lagen (1) die räumlich strukturierten Lagen bildet und daß jeweils eine Lage (2) der zweiten Art auf eine Seite oder auf beide Seiten jeweils einer Lage (1) der ersten Art mit gleicher Strukturierung aufgebracht ist.

4. Kontaktkörper nach einen der vorherigen Ansprüche, **dadurch gekennzeichnet, daß** die erste Art von Lagen (1) aus einem thermoplastischen oder duroplastischen Kunststoff besteht.

5. Kontaktkörper nach Anspruch 1, **dadurch gekennzeichnet, daß** die erste Art von Lagen (1) aus gewellten, vollflächigen oder durchbrochenen Folien oder aus gewellten Gittern besteht.

6. Kontaktkörper nach einen der vorherigen Ansprüche, **dadurch gekennzeichnet, daß** das die erste Art von Lagen (1) bildende selbsttragende Material ein poröses, saugfähiges Material ist.

7. Kontaktkörper nach einen der Ansprüche 4 bis 6, **dadurch gekennzeichnet, daß** das die erste Art von Lagen (1) bildende Material Polypropylen (PP) ist.

8. Kontaktkörper nach einen der vorherigen Ansprüche, **dadurch gekennzeichnet, daß** das die zweite Art von Lagen (2) bildende Material ein Geotextil oder ein Vlies ist.

9. Kontaktkörper nach einen der Ansprüche 3 bis 8, **dadurch gekennzeichnet, daß** das die zweite Art von Lagen (2) bildende Material einseitig oder beidseitig auf jeweils eine Lage (1) der ersten Art aufkaschiert ist.

10. Kontaktkörper (100), insbesondere für einen Verdunstungsbefeuchter, wobei der Kontaktkörper (100) aus mehreren Lagen (1, 2, 4), die zumindest zum Teil räumlich strukturiert sind und die miteinander verbunden sind, gebildet ist, wobei benachbarte Lagen (1; 2; 4) zwischen sich luftdurchlässige Strömungswege (5) ausbilden, wobei der Kontaktkörper (100) einerseits mit zu verdunstendem Wasser beschickbar und andererseits von einem Luftstrom unter Befeuchtung und Kühlung der Luft durchströmbar ist und wobei im Kontaktkörper (100) nur eine Art von Lagen (4) vorgesehen ist, die aus einem Material bestehen, das sowohl selbsttragend als auch saugfähig ist ,
**dadurch gekennzeichnet,**
**daß** das die Lagen (4) bildende Material ein geformtes Geotextil oder ein geformtes Vlies oder ein geformter poröser Kunststoff ist.

11. Kontaktkörper nach Anspruch 10, **dadurch gekennzeichnet, daß** in das Geotextil oder Vlies ein mechanisch und/oder thermisch formbares oder zunächst flüssiges und in einer formgebenden Form aushärtbares, tragendes Zusatzmaterial (42) eingemischt oder eingelegt ist.

12. Kontaktkörper nach Anspruch 10, **dadurch gekennzeichnet, daß** der Kunststoff ein durch vorherige Zugabe eines Schäumadditivs bei seiner Formgebung thermisch aufschäumbarer, offene Poren ausbildender Kunststoff ist.

13. Kontaktkörper nach einen der vorherigen Ansprüche, **dadurch gekennzeichnet, daß** die einzelnen Lagen (1, 2, 4) oder vorab gebildete Lagenpakete (3) des Kontaktkörpers (100) miteinander verklebt oder verschweißt oder mechanisch verbunden sind.

14. Kontaktkörper nach einen der vorherigen Ansprüche, **dadurch gekennzeichnet, daß** das die Lagen (1, 2, 4) bildende Material/die die Lagen (1, 2, 4) bildenden Materialien mit einem antibakteriell wirkenden Additiv ausgerüstet ist/sind.

15. Kontaktkörper nach Anspruch 14, **dadurch gekennzeichnet, daß** das antibakteriell wirkende Additiv in das Material/die Materialien der Lagen (1, 2, 4) eingebettet und/oder auf dieses/diese aufgetragen ist.

16. Verfahren zur Herstellung eines Kontaktkörpers (100), insbesondere für einen Verdunstungsbefeuchter, wobei der Kontaktkörper (100) selbsttragend ist und aus mehreren Lagen (1, 2, 4), die zumindest zum Teil räumlich strukturiert werden und die miteinander verbunden werden, gebildet wird, wobei benachbarte Lagen (1; 2; 4) zwischen sich luftdurchlässige Strömungswege (5) ausbilden,
**dadurch gekennzeichnet,**
**daß** eine Schmelzebahn oder eine erwärmte Folienoder Gitterbahn eines thermoplastischen Kunststoffs und parallel dazu einseitig oder beidseitig von der Schmelze- oder Folienbahn (je) eine Bahn aus einem saugfähigen Material einem formgebenden Werkzeug zugeführt werden, daß in dem Werkzeug die Schmelzeoder Folienbahn geformt und gleichzeitig mit der Bahn/den Bahnen aus dem saugfähigen Material unter deren gleicher Formung zu einem Lagenpaket (3) verbunden wird und daß nach einem die Formung fixierenden Abkühlen jeweils mehrere Lagenpakete (3) zu einem Kontaktkörperblock miteinander verbunden werden.

17. Verfahren nach Anspruch 16, **dadurch gekennzeichnet, daß** das Formen und Verbinden in einem stetig im Durchlauf arbeitenden Werkzeug erfolgt und daß das aus dem Werkzeug austretende Lagenpaket (3) in Abschnitte vorgebbarer Länge geteilt wird.

18. Verfahren nach Anspruch 16 oder 17, **dadurch gekennzeichnet, daß** Kontaktkörperblöcke mit einer Größe hergestellt werden, die größer ist als die Größe der Kontaktkörper (100) und daß aus dem Kontaktkörperblock anschließend Kontaktkörper (100) gewünschter Abmessungen ausgeschnitten werden.
